(19) Europäisches Patentamt
European Patent Office
Office européen des brevets

(11) **EP 3 108 561 B1**

(12) **EUROPÄISCHE PATENTSCHRIFT**

(45) Veröffentlichungstag und Bekanntmachung des Hinweises auf die Patenterteilung:
**31.07.2019 Patentblatt 2019/31**

(21) Anmeldenummer: **14759167.1**

(22) Anmeldetag: **03.09.2014**

(51) Int Cl.:
*H02J 3/38* (2006.01)　　　*H02M 7/48* (2007.01)
*H02M 1/44* (2007.01)

(86) Internationale Anmeldenummer:
**PCT/EP2014/068771**

(87) Internationale Veröffentlichungsnummer:
**WO 2015/124221 (27.08.2015 Gazette 2015/34)**

(54) **VERFAHREN ZUM BETREIBEN EINES BLINDLEISTUNGSFÄHIGEN WECHSELRICHTERS MIT POLWENDER UND BLINDLEISTUNGSFÄHIGER WECHSELRICHTER MIT POLWENDER**

METHOD FOR OPERATING AN INVERTER WITH REACTIVE POWER CAPABILITY HAVING A POLARITY REVERSER, AND INVERTER WITH REACTIVE POWER CAPABILITY HAVING A POLARITY REVERSER

PROCÉDÉ D'EXPLOITATION D'UN ONDULEUR CAPABLE DE FOURNIR DE LA PUISSANCE RÉACTIVE ÉQUIPÉ D'UN INVERSEUR DE POLARITÉ ET ONDULEUR CAPABLE DE FOURNIR DE LA PUISSANCE RÉACTIVE ÉQUIPÉ D'UN INVERSEUR DE POLARITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.02.2014 DE 102014102000**

(43) Veröffentlichungstag der Anmeldung:
**28.12.2016 Patentblatt 2016/52**

(73) Patentinhaber: **SMA Solar Technology AG**
**34266 Niestetal (DE)**

(72) Erfinder:
• **FRIEBE, Jens**
**34246 Vellmar (DE)**
• **PRIOR, Oliver**
**34454 Bad Arolsen (DE)**

(74) Vertreter: **Lahnor, Peter**
**SMA Solar Technology AG**
**Abt. T TC IP**
**Sonnenallee 1**
**34266 Niestetal (DE)**

(56) Entgegenhaltungen:
**WO-A1-2012/150933　　WO-A2-2012/146414**
**DE-B4-102006 025 975　　US-A1- 2012 155 141**

• **XIE SHAOJUN ET AL: "Research on a novel inverter based on DC/DC converter topology", THE 29TH ANNUAL CONFERENCE OF THE IEEE INDUSTRIAL ELECTRONICS SOCIETY, 2003. IECON '03, IEEE SERVICE CENTER, PISCATAWAY, NJ, Bd. 1, 2. November 2003 (2003-11-02), Seiten 647-651, XP010693589, ISBN: 978-0-7803-7906-0**

EP 3 108 561 B1

## Beschreibung

### TECHNISCHES GEBIET DER ERFINDUNG

Die Erfindung bezieht sich auf Verfahren zum Betreiben eines blindleistungsfähigen Wechselrichters mit einem Spannungszwischenkreis und einem Polwender sowie auf einen blindleistungsfähigen Wechselrichter mit einem bidirektionalen DC/DC-Wandler, einem Spannungszwischenkreis und einem Polwender, die die Merkmale der Oberbegriffe der unabhängigen Patentansprüche aufweisen.

### STAND DER TECHNIK

Um einen Wechselrichter mit wenigen hochfrequent getakteten Schaltern aufzubauen, der dennoch in der Lage ist, einen sinusförmigen Wechselstrom zu formen, ist es bekannt, einen DC/DC-Wandler mit einem Polwender zu kombinieren. In dieser Kombination formt der DC/DC-Wandler Halbwellen des Wechselstroms, und der Polwender verbindet zwei Wechselstromanschlüsse des Wechselrichters mit wechselnder Polarität mit den Ausgängen des DC/DC-Wandlers oder den Polen eines zwischengeschalteten Spannungszwischenkreises. Das Wechseln der Polarität erfolgt bei jedem Nulldurchgang einer von extern an den Wechselstromanschlüssen anliegenden Wechselspannung. In der Regel ist dies die Wechselspannung eines Wechselstromnetzes, in das mit dem Wechselrichter elektrische Energie von einem Gleichstromgenerator eingespeist wird.

Um einen derartigen Wechselrichter mit einem DC/DC-Wandler und einem Polwender blindleistungsfähig zu machen, sind verschiedene Maßnahmen bekannt. Diese Maßnahmen lassen sich in zwei Gruppen unterteilen.

Bei den Maßnahmen der ersten Gruppe wird der Strom mit dem DC/DC-Wandler zwar immer nur in Richtung der externen Wechselspannung ausgegeben, aber mit einer Verschiebung des Schwerpunkts seiner Stromzeitfläche gegenüber dem Schwerpunkt der Spannungszeitfläche während jeder Halbwelle der Wechselspannung. Dies ist beispielsweise in der DE 10 2010 035 020 A1 beschrieben. Zur Realisation dieser Maßnahme ist ein unidirektionaler DC/DC-Wandler ausreichend. Sinnvoll können auf diese Weise aber nur kleine Phasenverschiebungswinkel zwischen dem ausgegebenen Wechselstrom und der externen Wechselspannung realisiert werden. Der ausgegebene Wechselstrom wird mit größer werdendem Phasenverschiebungswinkel zunehmend gegenüber der gewünschten Sinusform deformiert und weist entsprechend einen mit dem Phasenverschiebungswinkel ansteigenden Klirrfaktor auf. Ein hoher Klirrfaktor weist darauf hin, dass ein Signal einen ausgeprägten Oberwellenanteil aufweist, von dem elektromagnetische Störungen ausgehen können.

Bei der zweiten Gruppe der Maßnahmen wird der DC/DC-Wandler bidirektional ausgebildet, so dass er den Strom auch in entgegengesetzter Richtung zu der momentanen Spannung an dem Wechselstromausgang fließen lassen kann. So ist aus der DE 10 2009 029 387 A1 ein Wechselrichter, insbesondere ein Solarzelleninverter einer Photovoltaikanlage, bekannt, bei dem eine Halbleiter-Brückenschaltung als Polwender mit einem DC/DC-Wandler in Form eines als Vierquadrantenstellers ausgebildeten Gleichstromstellers kombiniert ist. Der Gleichstromsteller kann insbesondere eine Kombination aus einem Tiefsetzsteller und einem Hochsetzsteller oder einen Hochtiefsetzsteller mit gemeinsamer Induktivität aufweisen.

Beim Betrieb eines Wechselrichters mit einem bidirektionalen DC/DC-Wandler und einem Polwender zur Bereitstellung von Blindleistung, d. h. bei einer Phasenverschiebung zwischen Wechselstrom und Wechselspannung an dem Wechselstromausgang des Wechselrichters, muss jedoch die Richtung des durch den DC/DC-Wandler fließenden Stroms umgekehrt werden, wenn der Polwender zwischen den Halbwellen der Wechselspannung die Polarität wechselt. Dies stellt bei einem Wechsel von einem gegenüber der momentanen Spannung negativen Strom zu einem positiven Strom in der Regel kein Problem dar, weil hierfür die Eingangsgleichspannung einer an den Gleichstromeingang angeschlossenen Gleichstromquelle als treibende Kraft wirkt. Anders verhält es sich jedoch beim Wechsel von einem im Vergleich zu der momentanen Spannung an dem Wechselstromausgang positiven Strom zu einem negativen Strom. Dies ist durch die im Nulldurchgang der Wechselspannung nur sehr kleine momentane Spannung an dem Wechselstromausgang begründet. Mit ihr kann eine zur Richtungsumkehr des Stroms durch eine Induktivität des DC/DC-Wandlers benötigte Spannungszeitfläche nur über einen vergleichsweise langen Zeitraum aufgebaut werden. Diese Zeit wirkt sich als Einbruch des Stroms und entsprechend als Abweichung von dem gewünschten sinusförmigen Verlauf des von dem Wechselrichter ausgegebenen Wechselstroms aus. Ein hoher Klirrfaktor des ausgegebenen Wechselstroms ist die Folge.

Diese Problematik wird in der DE 10 2009 029 387 A1 nicht angesprochen.

Auch aus der CN 103208935 A ist die Kombination eines bidirektionalen DC/DC-Wandlers mit einem Polwender zur Bereitstellung von Blindleistung bekannt.

Gemäß der CH 700 030 B1 ist ein mit einem Polwender kombinierter bidirektionaler DC/DC-Wandler in einen Tiefsetzsteller und einen Hochsetzsteller unterteilt, die einen symmetrischen Aufbau mit Induktivitäten zwischen beiden Polen eines Eingangsanschlusses und einem Spannungszwischenkreis aufweisen, wobei diese Induktivitäten sowohl von dem Tiefsetzsteller als auch von dem Hochsetzsteller genutzt werden. Auch hier wird auf den hohen Klirrfaktor des ausgegebenen Wechselstroms beim Bereitstellen von Blindleistung nicht eingegangen.

Die WO 2013/134904 A1 beschreibt einen Wechselrichter mit einem symmetrisch aufgebauten Hochtiefsetzsteller und einem Polwender.

Die WO 2012/146414 A2 beschreibt Verfahren mit den Merkmalen des Oberbegriffe des unabhängigen Patentanspruchs 1 und einen Wechselrichter mit den Merkmalen des Oberbegriffs des nebengeordneten Patentanspruchs 10. Dabei ist ein bidirektionaler DC/DC-Wandler in Form eines Hochtiefsetzstellers mit einem Polwender zu einem blindleistungsfähigen Wechselrichter kombiniert. Um Schwierigkeiten beim Ändern der Richtung des über den Spannungszwischenkreis fließenden Stroms bei einem negativen Phasenverschiebungswinkel zwischen Wechselstrom und Wechselspannung, d. h. bei einem der Wechselspannung nacheilenden Wechselstrom, zu umgehen, wird ein Sprung im Sollverlauf des Stroms durch die Drossel des Hochtiefsetzstellers vermieden. Dazu wird der Sollverlauf des Stroms so modifiziert, dass er im Nulldurchgang der Wechselspannung ebenfalls einen Nulldurchgang aufweist. Die resultierende Abweichung des ausgegebenen Stroms von dem gewünschten sinusförmigen Verlauf resultiert auch hier in einem hohen Klirrfaktor.

Die JP 2002 369388 A offenbart die Kombination eines bidirektionalen Hochsetzstellers mit einer Wechselrichterbrücke, bei der zumindest im Nulldurchgang der Spannung wenigstens zwei Schalter der Wechselrichterbrücke neben zwei Schaltern des Hochsetzstellers zur Formung des Wechselstroms hochfrequent getaktet werden. Die Wechselrichterbrücke ist somit kein Polwender, dessen Brückenschalter im Wesentlichen mit niedriger Frequenz von der Größenordnung der Frequenz des ausgegebenen Wechselstroms getaktet werden.

Aus der WO 2011/042567 A1 ist ein blindleistungsfähiger Wechselrichter bekannt, der zwei Hochtiefsetzsteller umfasst, deren Drosseln jeweils mit einem der beiden Anschlüsse eines Wechselstromausgangs verbunden sind. Dabei werden die beiden Hochtiefsetzsteller wechselweise für eine Halbwelle des ausgegebenen Wechselstroms gebrückt. Blindleistung mit einem von null abweichenden Phasenverschiebungswinkel des ausgegebenen Wechselstroms wird durch blockweises Ausgeben von reiner Wirkleistung und reiner Blindleistung über jeweils eine Periode oder mehrere Perioden der Wechselspannung realisiert.

Die DE 10 2006 025 975 B4 offenbart ein Verfahren zum Betreiben einer blindleistungsfähigen Wechselrichterschaltung, die einen Primärkreis und einen Sekundärkreis umfasst, welche mittels eines Transformators galvanisch getrennt sind, wobei der Primärkreis Mittel zum getakteten Anschließen einer Primärwicklung an eine am Eingang der Wechselrichterschaltung anliegende Gleichspannung umfasst und wobei der Sekundärkreis Mittel zum Anschließen einer Sekundärwicklung an eine am Ausgang der Wechselrichterschaltung anliegende Wechselspannung umfasst. Eine Stromformung erfolgt durch pulsweitenmodulierte Taktung von Schaltern einer sekundärseitig angeordneten Vollbrückenschaltung. In einer Schaltphase des Verfahrens wird durch geeignete Ansteuerung von Schaltern der Vollbrückenschaltung die Sekundärwicklung vom Ausgang der Wechselrichterschaltung getrennt und ein Freilaufpfad zwischen Ausgangsanschlüssen der Wechselrichterschaltung bereitgestellt.

## AUFGABE DER ERFINDUNG

Der Erfindung liegt die Aufgabe zugrunde, Verfahren zum Betreiben eines blindleistungsfähigen Wechselrichters mit einem Spannungszwischenkreis und einem Polwender sowie einen entsprechenden Wechselrichter bereitzustellen, bei denen der ausgegebene Wechselstrom, auch wenn er der Wechselspannung an dem Wechselstromausgang mit einem großen negativen Phasenverschiebungswinkel nacheilt, einen geringen Klirrfaktor aufweist.

## LÖSUNG

Die Aufgabe der Erfindung wird durch ein Verfahren mit den Merkmalen des unabhängigen Patentanspruchs 1 und durch einen Wechselrichter mit den Merkmalen des nebengeordneten Patentanspruchs 10 gelöst. Vorteilhafte Ausführungsformen des erfindungsgemäßen Verfahrens und des erfindungsgemäßen Wechselrichters sind in den abhängigen Patentansprüchen definiert.

## BESCHREIBUNG DER ERFINDUNG

Bei dem erfindungsgemäßen Verfahren zum Betreiben eines blindleistungsfähigen Wechselrichters mit einem Spannungszwischenkreis und einem Polwender, wobei Pole des Spannungszwischenkreises mittels des Polwenders in unterschiedlichen Konfigurationen, beispielsweise wechselweise, mit Anschlüssen eines Wechselstromausgangs verbindbar sind, um die Polarität des Wechselstromausgangs gegenüber dem Spannungszwischenkreis zu ändern, wird bei einer Phasenverschiebung zwischen Wechselstrom und Wechselspannung an dem Wechselstromausgang, also zur Bereitstellung von Blindleistung, die Richtung eines über den Spannungszwischenkreis fließenden Stroms umgekehrt, wenn mit dem Polwender zwischen den Halbwellen der Wechselspannung die Polarität des Wechselstromausgangs gegenüber dem Spannungszwischenkreis geändert wird. Das Umkehren der Richtung des über den Spannungszwischenkreis fließenden Stroms umfasst, dass der Wechselstromausgang von dem Spannungszwischenkreis getrennt wird, dass ein Freilaufpfad zwischen den beiden Anschlüssen des Wechselstromausgangs bereitgestellt wird, während der Wechselstromausgang von dem Spannungszwischenkreis getrennt ist, und dass der Wechselstromausgang bei mit dem Polwender geänderter Polarität des Wechselstromausgangs gegenüber dem Spannungszwischenkreis wieder mit dem Spannungszwischenkreis verbunden wird.

Die Bidirektionalität des blindleistungsfähigen Wechselrichters kann durch mindestens einen bidirektionalen (Teil-) Wandler oder durch mindestens zwei antiparallel geschaltete unidirektionale Teilwandler bereitgestellt werden, die den über den Spannungszwischenkreis fließenden Strom formen. Grundsätzlich reicht es dabei, dass die Bidirektionalität in Bezug auf den Spannungszwischenkreis gegeben ist, d. h. dass der DC/DC-Wandler den Strom in beiden Richtungen über den Spannungszwischenkreis fließen lassen kann. So müssen zum Beispiel zwei antiparallel geschaltete unidirektionale Teilwandler auf ihrer dem Spannungszwischenkreis abgekehrten Seite nicht miteinander verbunden sein. Vielmehr kann zumindest einer der Teilwandler dort ausschließlich an einen Zwischenspeicher für elektrische Energie angeschlossen sein.

Der über den Spannungszwischenkreis fließende Strom ist der Strom, der in dem blindleistungsfähigen Wechselrichter über den Spannungszwischenkreis hinweg zu dem Polwender fließt. Dieser Strom umfasst Anteile, die in die bzw. aus der Zwischenkreiskapazität des Spannungszwischenkreises fließen. Die Zwischenkreiskapazität wird durch einen oder mehrere parallel oder in Reihe geschaltete Zwischenkreiskondensator(en) bereitgestellt.

Durch das Trennen des Wechselstromausgangs von dem Spannungszwischenkreis und das Bereitstellen des Freilaufpfads zwischen den Anschlüssen des Wechselstromausgangs zumindest während dieser Trennung kann der Wechselstrom am Wechselstromausgang über den Freilaufpfad weiter fließen, wobei er durch ausgangsseitig vorhandene, stromdurchflossene Induktivitäten aufrecht erhalten wird. Der Wechselstrom wird so nicht durch die Maßnahmen beeinträchtigt, die insbesondere bei der Wechselspannung an dem Wechselstromausgang nacheilendem Wechselstrom zum Umkehren der Richtung des über den Spannungszwischenkreis fließenden Stroms ergriffen werden müssen, wenn mit dem Polwender zwischen den Halbwellen der Wechselspannung die Polarität des Wechselstromausgangs gegenüber dem Spannungszwischenkreis geändert wird. Diese Maßnahmen wirken sich damit nicht in einem erhöhten Klirrfaktor des Wechselstroms aus.

Zum Trennen des Wechselstromausgangs von dem Spannungszwischenkreis reicht grundsätzlich eine einpolige Trennung aus, weil bereits diese einen Stromfluss von dem Spannungszwischenkreis zu dem Wechselstromausgang und umgekehrt verhindert.

Wenn der Wechselstromausgang mehr als zwei Anschlüsse aufweist, bedeutet die Angabe, dass der Freilaufpfad zwischen den Anschlüssen des Wechselstromausgangs bereitgestellt wird, dass der Freilaufpfad zumindest zwischen zwei dieser Anschlüsse bereitgestellt wird.

Der Freilaufpfad für den Wechselstrom kann durch eine Kapazität zwischen den Anschlüssen des Wechselstromausgangs bereitgestellt werden, d. h. der Freilaufpfad muss die Anschlüsse des Wechselstromausgangs nicht galvanisch miteinander verbinden. Eine für den Freilaufpfad geeignete Kapazität zwischen den Anschlüssen des Wechselstromausgangs kann durch einen bereits vorhandenen Filterkondensator oder einen zusätzlichen Kondensator zwischen den Anschlüssen des Wechselstromausgangs bereitgestellt werden.

Der Freilaufpfad kann aber auch durch Kurzschließen der Anschlüsse des Wechselstromausgangs bereitgestellt werden, d. h. indem diese direkt miteinander verbunden werden. Auch ein hartes Kurzschließen der Anschlüsse des Wechselstromausgangs ist angesichts der zu diesem Zeitpunkt nur geringen Spannung an dem Wechselstromausgang unkritisch.

Das Trennen des Wechselstromausgangs von dem Spannungszwischenkreis und das Bereitstellen des Freilaufpfads für den Wechselstrom können optional auch beim Umkehren der Richtung des über den Spannungszwischenkreis fließenden Stroms bei der Wechselspannung an dem Wechselstromausgang voreilendem Wechselstrom erfolgen. Vorteilhaft erfolgen sie zumindest dann, wenn der Wechselstrom der Wechselspannung an dem Wechselstromausgang nacheilt, d. h. bei einem negativen Phasenverschiebungswinkel zwischen Wechselstrom und Wechselspannung an dem Wechselstromausgang.

Bei dem erfindungsgemäßen Verfahren ist es vorteilhaft, Spannung und/oder Strom an dem Wechselstromausgang zu messen, um geeignete Zeitpunkte zum erfindungsgemäßen Trennen des Wechselstromausgangs von dem Spannungszwischenkreis bzw. zum Wiederverbinden des Wechselstromausgangs mit dem Spannungszwischenkreis zu ermitteln.

Als Polwender kann bei dem erfindungsgemäßen Verfahren eine Brückenschaltung verwendet werden, die im Wesentlichen zwischen den Halbwellen der Wechselspannung, d. h. in deren Nulldurchgang, die Polarität des Wechselstromausgangs gegenüber dem Spannungszwischenkreis ändert. Dies schließt aber nicht aus, dass die Brückenschaltung zwischenzeitlich auch noch andere Funktionen erfüllt, wozu ihre Brückenschalter beispielsweise vorübergehend auch hochfrequent getaktet werden können.

Bevorzugt wird bei dem erfindungsgemäßen Verfahren eine Umklappbrücke als Polwender verwendet. Dabei erfolgt das Trennen des Wechselstromausgangs von dem Spannungszwischenkreis vorzugsweise durch Öffnen von Brückenschaltern des Polwenders. Ebenso werden die Anschlüsse des Wechselstromausgangs beim Umkehren der Richtung des Stroms über den Spannungszwischenkreis vorzugsweise über Brückenschalter des Polwenders kurzgeschlossen.

Konkret können im Fall von zwei Anschlüssen des Wechselstromausgangs und entsprechend insgesamt vier Brückenschaltern des Polwenders zum Trennen des Wechselstromausgangs von dem Spannungszwischenkreis und zum Kurzschließen der Anschlüsse des Wechselstromausgangs zwei Brückenschalter des Polwenders, die mit demselben Pol des Spannungszwischenkreises verbunden sind, geöffnet werden, während die beiden anderen Brückenschalter des Polwenders geschlossen werden. Dabei können zuvor bereits geöffnete oder geschlossene Brückenschalter des Polwenders geöffnet oder geschlossen bleiben. Zum anschließenden Wiederverbinden des Wechselstromausgangs mit dem Spannungszwischenkreis bei mit dem Polwender geänderter Polarität des Wechselstromausgangs gegenüber dem Spannungszwischenkreis reicht es aus, einen der zuvor geöffneten Brückenschalter zu schließen und einen der zuvor geschlossenen Brückenschalter des Polwenders zu öffnen.

In einer konkreten Ausführungsform betrifft das erfindungsgemäße Verfahren das Betreiben eines blindleistungsfähigen Wechselrichters mit einem mindestens eine Speicherdrosseleinrichtung aufweisenden bidirektionalen DC/DC-Wandler, dem Spannungszwischenkreis und dem Polwender. Dabei ist ein Anschluss der Speicherdrosseleinrichtung über einen Schalter mit einem Pol eines Gleichstromeingangs verbindbar. Ein anderer Anschluss der Speicherdrosseleinrichtung ist mit einem Pol des Spannungszwischenkreises verbunden; und der eine oder ein weiterer, an dieselbe Wicklung der Speicherdrosseleinrichtung wie der andere Anschluss angeschlossene(r) Anschluss der Speicherdrosseleinrichtung ist über ein Schaltelement mit dem anderen Pol des Spannungszwischenkreises verbindbar.

Dass der Anschluss der Speicherdrosseleinrichtung über einen Schalter mit einem Pol eines Gleichstromeingangs verbindbar ist, erfordert nicht zwingend, dass eine galvanische Verbindung des Anschlusses der Speicherdrosseleinrichtung mit einem Pol des Gleichstromeingangs herstellbar ist. Beispielsweise wird bei einem Eintaktdurchflusswandler mit einer Speicherdrossel auf der dem Schalter gegenüberliegenden Seite des Transformators die geforderte vorübergehende Verbindung des Anschlusses der Speicherdrossel mit dem Pol des Gleichstromeingangs durch Schließen des Schalters über den galvanisch trennenden Transformator hinweg hergestellt.

In gleicher Weise erfordert auch, dass der andere Anschluss der Speicherdrosseleinrichtung mit dem Pol des Spannungszwischenkreises verbunden ist, nicht zwingend eine galvanische Verbindung. Beispielsweise ist bei einem Eintaktdurchflusswandler mit einer Speicherdrossel auf derselben Seite des Transformators wie der Schalter die geforderte Verbindung des Pols der Speicherdrossel mit dem Pol des Spannungszwischenkreises über den galvanisch trennenden Transformator hinweg gegeben.

Die voranstehende Definition des blindleistungsfähigen Wechselrichters bei der konkreten Ausführungsform des erfindungsgemäßen Verfahrens trifft auf viele Wechselrichter zu, bei denen der bidirektionale DC/DC-Wandler als Kombination eines Tiefsetzstellers mit einem Hochsetzsteller oder als Hochtiefsetzsteller ausgebildet ist. Dabei kann auch ein symmetrischer Aufbau mit zwei Speicherdrosseleinrichtungen realisiert sein. Diese Speicherdrosseleinrichtungen können bei einer Kombination eines Tiefsetzstellers mit dem Hochsetzsteller von beiden gemeinsam verwendet werden. Der Hochsetzsteller und der Tiefsetzsteller können aber auch getrennte Speicherdrosseleinrichtungen aufweisen. Konkret kann die Topologie des Wechselrichters grundsätzlich genauso aufgebaut sein, wie in den Dokumenten, die zum Stand der Technik von blindleistungsfähigen Wechselrichtern mit bidirektionalem DC/DC-Wandler und Polwender in dem voranstehenden Abschnitt "Stand der Technik" gewürdigt wurden. Weitere Variationen der Topologie des Wechselrichters sind möglich.

In der konkreten Ausführungsform des erfindungsgemäßen Verfahrens umfasst das Umkehren der Richtung des über den Spannungszwischenkreis fließenden Stroms bei der Wechselspannung an dem Wechselstromausgang nacheilendem Wechselstrom zusätzlich die folgenden Schritte:

- Aufladen des Spannungszwischenkreises mit dem durch die Speicherdrosseleinrichtung fließenden Strom und
- Entladen des Spannungszwischenkreises über die Speicherdrosseleinrichtung oder über eine weitere Speicherdrosseleinrichtung.

Wenn in der konkreten Ausführungsform des erfindungsgemäßen Verfahrens beim Umkehren der Richtung des über den Spannungszwischenkreis fließenden Stroms auf das vorübergehende Trennen des Wechselstromausgangs von dem Spannungszwischenkreis und/oder das Bereitstellen eines Freilaufs zwischen den Anschlüssen des Wechselstromausgangs verzichtet wird, erfährt der ausgegebene Wechselstrom eine vorübergehende Absenkung. Diese Absenkung kann durch ein geeignet dimensioniertes AC-Filter und/oder durch adaptiv zuschaltbare Dämpfungselemente in dem Wechselstromausgangs geglättet werden.

Konkret kann das Umkehren der Richtung des über den Spannungszwischenkreis fließenden Stroms bei der Wechselspannung an dem Wechselstromausgang nacheilendem Wechselstrom folgendermaßen ablaufen: Zunächst wird der Spannungszwischenkreis von dem Wechselstromausgang getrennt. Dann wird der Schalter, der das eine Ende der Speicherdrosseleinrichtung mit dem Gleichstromeingang verbindet, geöffnet. Wenn dann der durch die Speicherdrosseleinrichtung fließende Strom auf das Schaltelement kommutiert, was das Kommutieren auf eine Diode oder das Schließen eines Schalters des Schaltelements umfassen kann, lädt der durch die Speicherdrosseleinrichtung fließende Strom den Spannungszwischenkreis auf. Hierdurch baut sich eine Gegenspannung zu dem Strom auf, bis dieser abklingt.

Anschließend erfolgt dann ein Entladen des Spannungszwischenkreises entweder über dieselbe Speicherdrosseleinrichtung, wobei aber der beim Entladen fließende Strom die umgekehrte Richtung hat wie beim Aufladen des Spannungszwischenkreises, oder über eine weitere Speicherdrosseleinrichtung. In dem Moment, in dem der Spannungszwischenkreis über die jeweilige Speicherdrosseleinrichtung entladen ist, fließt durch diese ein Strom, der nicht nur wie gewünscht die umgekehrte Richtung wie der ursprüngliche Strom hat, sondern auch dieselbe Stromstärke. Letzteres setzt allerdings im Fall einer weiteren Speicherdrosseleinrichtung voraus, dass diese eine gleich große Induktivität aufweist wie die andere Speicherdrosseleinrichtung. Außerdem wird dieselbe Stromstärke auch bei gleich großen Induktivitäten nur ohne Berücksichtigung von Verlusten erreicht, die aber in der Regel sehr klein und damit vernachlässigbar sind.

Wenn der Strom mit umgekehrter Richtung und gleicher oder annähernd gleicher Stromstärke durch die jeweilige Speicherdrosseleinrichtung fließt, kann der Spannungszwischenkreis wieder mit dem Wechselstromausgang verbunden werden. Es versteht sich, dass dieses Verbinden bei mit dem Polwender geänderter Polarität des Wechselstromausgangs gegenüber dem Spannungszwischenkreis erfolgt. Nach diesem Wiederverbinden des Spannungszwischenkreises mit dem Wechselstromausgang kann der DC/DC-Wandler direkt so betrieben werden, dass der durch das Entladen des Spannungszwischenkreises durch die Speicherdrosseleinrichtung oder die weitere Speicherdrosseleinrichtung aufgebaute Strom weiter fließt bzw. an den dann geltenden Stromsollwert des ausgegebenen Wechselstroms angepasst wird.

Dabei erfolgen die Schritte des Trennens des Wechselstromausgangs von dem Spannungszwischenkreis, das Aufladen des Spannungszwischenkreises, das Entladen des Spannungszwischenkreises und das Wiederverbinden des Wechselstromausgangs mit dem Spannungszwischenkreis zumindest in etwa in der Reihenfolge, in der sie hier aufgelistet sind. So wird der Spannungszwischenkreis zumindest im Wesentlichen aufgeladen, wenn er von dem Wechselstromausgang getrennt ist, auch wenn das Aufladen schon vor dem Trennen einsetzen kann. Ebenso kann das Entladen des Spannungszwischenkreises zumindest dann, wenn es über eine weitere Speicherdrosseleinrichtung erfolgt, schon vor Ende des Aufladens einsetzen oder sogar gleichzeitig mit dem Aufladen erfolgen. Ferner muss der Spannungszwischenkreis bei seinem Wiederverbinden mit dem Wechselstromausgang nicht vollständig entladen sein.

Das erfindungsgemäße Umkehren der Richtung des über den Spannungszwischenkreis fließenden Stroms bei negativem Phasenverschiebungswinkel zwischen Wechselstrom und Wechselspannung erfolgt sehr schnell. Konkret dauert es $\pi\sqrt{LC}$, wobei L die Induktivität der Speicherdrosseleinrichtung ist und C die Kapazität des Spannungszwischenkreises ist. Das heißt, das Umkehren der Richtung des Stroms dauert eine halbe Resonanzperiode eines Resonanzkreises, der aus der Speicherdrosseleinrichtung und dem Spannungszwischenkreis gebildet wird. Dabei ist es auch unerheblich, ob der Spannungszwischenkreis über die Speicherdrosseleinrichtung oder eine weitere Speicherdrosseleinrichtung entladen wird. Wenn die weitere Speicherdrosseleinrichtung dieselbe Induktivität aufweist, ergibt sich sogar genau dieselbe Dauer des Umkehrens der Richtung des Stroms. In jedem Fall dauert das Umkehren der Richtung des Stroms viel weniger lange, als wenn hierfür eine ausreichende Spannungszeitfläche der Wechselspannung an dem Wechselstromausgang abgewartet werden müsste.

Mit dem erfindungsgemäßen Verfahren kann ein sehr nahe an einem sinusförmigen Sollwertverlauf liegender Verlauf des ausgegebenen Wechselstroms auch bei negativem Phasenverschiebungswinkel des Wechselstroms gegenüber der Wechselspannung und entsprechend ein sehr kleiner Klirrfaktor erreicht werden.

Wenn das Schaltelement, über das das eine Ende der Speicherdrosseleinrichtung mit dem anderen Pol des Spannungszwischenkreises verbindbar ist, ein weiterer Schalter ist, wird dieser zum Auf- und Entladen des Spannungszwischenkreises für insgesamt eine halbe Resonanzperiode des durch die Speicherdrosseleinrichtung und den Spannungszwischenkreis gebildeten Resonanzkreises geschlossen. Das Schaltelement kann aber auch eine Diode sein, auf die der Strom durch die Speicherdrosseleinrichtung ohne aktiven Eingriff kommutiert, wenn der Schalter geöffnet wird, der das eine Ende der Speicherdrosseleinrichtung mit dem einen Pol des Gleichstromeingangs verbindet. Dann ist ein weiterer Schalter vorzusehen, der zum Entladen des Spannungszwischenkreises über die Speicherdrosseleinrichtung geschlossen wird. Dieses Schließen erfolgt dann für eine viertel Resonanzperiode des durch die Speicherdrosseleinrichtung oder die weitere Speicherdrosseleinrichtung und die Kapazität des Spannungszwischenkreises gebildeten Resonanzkreises.

Die Induktivität der Drosseleinrichtung und die Kapazität des Spannungszwischenkreises sind so aufeinander abzustimmen, dass während der Resonanzschwingung des von ihnen ausgebildeten Resonanzkreises die Spannung eines Eingangsspannungszwischenkreises des Wechselrichters nicht durch die Spannung des Spannungszwischenkreises überschritten wird. Ansonsten kann es zu unerwünschten Stromflüssen über den bidirektionalen DC/DC-Wandler, konkret durch antiparallele Dioden von Schaltern des DC/DC-Wandlers kommen. Für die Abstimmung reicht es aus, die Kapazität ausreichend groß zu wählen. Alternativ oder zusätzlich kann für das erfindungsgemäße Verfahren die Spannung des Eingangsspannungszwischenkreises gezielt erhöht werden, um zu vermeiden, dass sie von der maximalen Spannung des Spannungszwischenkreises überschritten wird. Dass die Spannung des Spannungszwischenkreises im Resonanzkreis kleiner als die Eingangszwischenkreisspannung sein sollte, ergibt sich daraus, dass der Zeitpunkt, zu dem ein Schalter, der zum Entladen des Spannungszwischenkreises über die Speicherdrosseleinrichtung geschlossen wird, sich nicht ganz exakt bestimmen lässt. Bei Einhaltung dieser Obergrenze für die Spannung des Spannungszwischenkreises durch entsprechende Dimensionierung der Kapazität des Spannungszwischenkreises kann der Schalter sogar bewusst verzögert eingeschaltet werden. Umgekehrt kann ein Schalter, mit dem die resonante Stromrichtungsumkehr hervorgerufen wird, nur solange geschlossen werden, bis die Spannung über dem Spannungszwischenkreis die Spannung über dem Eingangsspannungszwischenkreis erreicht. Der Rest der Resonanzschwingung kann dann über einen erweiterten, den Eingangsspannungszwischenkreis einschließenden Resonanzkreis und über die bereits angesprochenen antiparallelen Dioden hinweg erfolgen.

Wie bereits angemerkt wurde, sind die Induktivitäten der Speicherdrosseleinrichtung und der weiteren Speicherdrosseleinrichtung, soweit vorhanden, vorzugsweise gleich groß, um zwar die Richtung des Stromes über den Spannungszwischenkreis mit den erfindungsgemäßen Schritten umzukehren, nicht aber seine Stromstärke wesentlich zu ändern. Grundsätzlich kann auch die Induktivität der weiteren Speicherdrosseleinrichtung etwas kleiner als die Induktivität der anderen Speicherdrosseleinrichtung sein, um trotz unvermeidbar auftretender kleiner Verluste eine gleich große Stromstärke des Stroms mit umgekehrter Richtung zu erreichen. Allerdings nimmt der Sollwert der Stromstärke des der Wechselspannung nacheilenden Stroms bei einem Wechselstrom mit negativem Phasenverschiebungswinkel zu dem Zeitpunkt, zu dem das Umkehren der Richtung des Stroms erfolgt, ab, so dass eine etwas geringere Stromstärke bei dem umgekehrten Strom unschädlich ist. In jedem Fall sollten die Induktivitäten der Speicherdrosseleinrichtung und der weiteren Speicherdrosseleinrichtung zumindest annähernd gleich groß sein.

Konkret kann der bidirektionale DC/DC-Wandler bei dem erfindungsgemäßen Verfahren so betrieben werden, dass der Strom zu dem Spannungszwischenkreis immer über die Speicherdrosseleinrichtung und der Strom von dem Spannungszwischenkreis immer über die weitere Speicherdrosseleinrichtung fließt, also die Speicherdrosseleinrichtung immer für positiven Strom und die weitere Speicherdrosseleinrichtung immer für negativen Strom bezogen auf die momentane Spannung an dem Wechselstromausgang genutzt wird. Dazu kann die Speicherdrosseleinrichtung eine Drossel eines Tiefsetzstellers sein, während die weitere Speicherdrosseleinrichtung eine Drossel eines Hochsetzstellers ist, der in Rückwärtsrichtung von dem Spannungszwischenkreis zu dem Gleichstromeingang geschaltet ist.

Bei der vorliegenden Erfindung kann die Speicherdrosseleinrichtung auch einen Speichertransformator eines Sperrwandlers mit Sperrrichtung von dem Spannungszwischenkreis zu dem Gleichstromeingang umfassen. Dann kann die weitere Speicherdrosseleinrichtung insbesondere einen weiterer Speichertransformator eines weiteren Sperrwandlers mit Sperrrichtung von dem Gleichstromeingang zu dem Spannungszwischenkreis umfassen. Grundsätzlich kann die weitere Speicherdrosseleinrichtung aber auch in diesem Fall eine Drossel eines von dem Spannungszwischenkreis zu dem Gleichstromeingang ausgerichteten Hochsetzstellers sein. In dem Fall, dass die Speicherdrosseleinrichtung einen Speichertransformator eines Sperrwandlers umfasst, weist sie gekoppelte Wicklungen auf, wobei der eine Anschluss, den der Schalter mit dem Gleichstromeingang verbindet, an eine Wicklung angeschlossen ist, während der andere mit dem einen Pol des Spannungszwischenkreises verbundene Anschluss und der weitere, über das Schaltelement mit dem anderen Pol des Spannungszwischenkreises verbindbare Anschluss an eine andere Wicklung angeschlossen sind. Entsprechend verhält es sich, wenn die weitere Speicherdrosseleinrichtung einen weiteren Speichertransformator eines weiteren Sperrwandlers umfasst.

Allgemein kann die weitere Speicherdrosseleinrichtung über einen zusätzlichen Schalter an einen Pol des Gleichstromeingangs oder an einen Pol eines Zwischenspeichers für elektrische Energie anschließbar sein. Bei Verwendung eines Zwischenspeichers kann vermieden werden, dass eine an den Gleichstromanschluss angeschlossene Gleichstromquelle bei Bereitstellung von Blindleistung mit dem Wechselrichter im schnellen Wechsel mit der Frequenz des Wechselstroms entladen und geladen wird.

Bei einem blindleistungsfähigen Wechselrichter mit einem bidirektionalen DC/DC-Wandler, einem Spannungszwischenkreis, einem Polwender und einer Betriebssteuerung, wobei der Polwender zwischen Pole des Spannungszwischenkreises und Anschlüsse eines Wechselstromausgangs geschaltet ist, ist die Betriebssteuerung so ausgebildet, dass sie den Wechselrichter nach dem erfindungsgemäßen Verfahren betreibt.

Zur Umsetzung der vorliegenden Erfindung reicht es bei vielen bekannten Wechselrichter Topologien tatsächlich aus, die Betriebssteuerung zu modifizieren. Das heißt, die Erfindung ist mit geringem Aufwand umsetzbar. Die erfindungsgemäßen Vorteile können daher mit geringem Investitionsaufwand genutzt werden.

Andere Wechselrichtertopologien können mit einfachen Maßnahmen zu vorteilhaften Ausführungsformen eines erfindungsgemäßen Wechselrichters ergänzt werden. Hierzu zählt ein grundsätzlich aus der DE 10 2010 035 020 A1 bekannter symmetrischer Tiefsetzsteller mit zwei zu einer Mittelleitung symmetrisch angeordneten Schaltern mit antiparallelen Dioden, zwei zu der Mittelleitung symmetrisch angeordneten Drosseln und zwei zu der Mittelleitung symmetrisch angeordneten Dioden, wobei die Mittelleitung Mittelpunkte eines Eingangsspannungszwischenkreises, Mittelpunkte zwischen den Dioden und Mittelpunkte des Spannungszwischenkreises verbindet. Es versteht sich, dass sich bei diesen bekannten symmetrischen Tiefsetzstellern die Symmetrie zur Mittelleitung nicht auf die Durchlassrichtungen der Dioden und der Schalter, und somit auch deren antiparallelen Dioden bezieht. Ein solcher symmetrischer Tiefsetzsteller kann um einen parallel zu den Dioden und ohne direkten Anschluss an die Mittelleitung geschalteten Schalter ergänzt werden. Dieser Schalter kann zum einen geschlossen werden, um die resonante Stromrichtungsumkehr des über den Spannungszwischenkreis fließenden Stroms zu bewirken und zum anderen getaktet werden, um den bekannten, grundsätzlich nicht bidirektionalen symmetrischen Tiefsetzsteller mit einer Hochsetzstellerfunktion in Gegenrichtung zu versehen. In dieser Hochsetzstellerfunktion in Gegenrichtung wird der zusätzliche Schalter als Hochsetzstellerschalter getaktet, und die antiparallelen Dioden der normalerweise als Tiefsetzstellerschalter dienenden Schalter wirken als Hochsetzstellerdioden. Dabei wird von den Vorteilen des symmetrisch ausgebildeten Tiefsetzstellers in der Hochsetzstellerfunktion kein Gebrauch gemacht. Dies ist akzeptabel, da die Hochsetzstellerfunktion insbesondere bei kleinen Phasenwinkeln nur kurzfristig benötigt wird.

Wenn ein aus der DE 10 2010 035 020 A1 bekannter symmetrischer Tiefsetzsteller um zwei jeweils nur parallel zu einer der beiden symmetrisch angeordneten Dioden, d. h. der beiden Tiefsetzstellerdioden, geschaltete Schalter mit jeweils direktem Anschluss an die Mittelleitung ergänzt wird, können diese beiden ergänzten Schalter nach unterschiedlichen Schaltmustern geschlossen werden, um verschiedene Resonanzkreise zu aktivieren. Dabei erweist es sich als vorteilhaft, wenn zu Zwischenkreiskondensatoren, die die beiden Hälften des geteilten Spannungszwischenkreises ausbilden, jeweils Dioden parallel geschaltet sind, die in Bezug auf die Pole des Spannungszwischenkreises gleiche Durchlassrichtungen aufweisen wie die Tiefsetzstellerdioden und die verhindern, dass sich die Zwischenkreiskondensatoren entgegengesetzt zu ihrer im Betrieb des Wechselrichters üblichen Polarität aufladen.

Mögliche Ausführungsformen des erfindungsgemäßen bidirektionalen Wechselrichters wurden bereits im Zusammenhang mit dem erfindungsgemäßen Verfahren erläutert. Ergänzend ist anzumerken, dass der DC/DC-Wandler und der Polwender zwar in einem gemeinsamen Wechselrichtergehäuse angeordnet sein können, aber nicht müssen. Beispielsweise sind ein oder mehrere generatornahe DC/DC-Wandler und ein gemeinsamer Polwender, z. B. an einem Netzeinspeisepunkt, in getrennten Gehäusen möglich.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere der relativen Anordnung und Wirkverbindung mehrerer Bauteile zueinander - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

## KURZBESCHREIBUNG DER FIGUREN

Die Erfindung wird im Folgenden anhand von Ausführungsbeispielen unter Bezugnahme auf die beigefügten Figuren näher erläutert und beschrieben.

**Fig. 1** zeigt einen Wechselrichter mit einem Hochtiefsetzsteller, einem Spannungszwischenkreis und einem Polwender, wobei Schaltzustände der Schalter des Hochtiefsetzstellers und der Brückenschalter des Polwenders kurz vor dem Ende einer Halbwelle der Wechselspannung bei der Wechselspannung nacheilendem Wechselstrom angedeutet sind.

**Fig. 2** zeigt den Wechselrichter gemäß Fig. 1 mit angedeuteten Schaltzuständen beim Übergang zu der nächsten Halbwelle der Wechselspannung.

**Fig. 3**  zeigt den Wechselrichter gemäß Fig. 1 und 2 mit angedeuteten Schaltstellungen zu Beginn der nächsten Halbwelle der Wechselspannung.

**Fig. 4**  zeigt einen Wechselrichter, bei dem statt eines Hochtiefsetzstellers eine Kombination eines Tiefsetzstellers und eines gegenläufig ausgerichteten Hochsetzstellers als bidirektionaler DC/DC-Wandler vorgesehen ist und der ansonsten wie der Wechselrichter gemäß den Fig. 1 und 2 einen Spannungszwischenkreis und einen Polwender aufweist.

**Fig. 5**  zeigt einen Wechselrichter, bei dem der bidirektionale DC/DC-Wandler aus zwei Sperrwandlern mit gegenläufigen Sperrrichtungen ausgebildet ist und der ansonsten wie die Wechselrichter gemäß den Fig. 1 bis 4 einen Spannungszwischenkreis und einen Polwender aufweist.

**Fig. 6**  zeigt den zeitlichen Verlauf einer Zwischenkreisspannung an dem Spannungszwischenkreis und eines über den Spannungszwischenkreis fließenden Stroms über eine Periode des mit einem der Wechselrichter gemäß den Fig. 1 bis 5 ausgegebenen Wechselstroms.

**Fig. 7**  zeigt einen der Wechselspannung am Wechselstromausgang des jeweiligen Wechselrichters gemäß den Fig. 1 bis 5 nacheilenden Wechselstrom, der von dem Polwender des jeweiligen Wechselrichters aus dem Strom gemäß Fig. 6 geformt wird.

**Fig. 8**  zeigt einen Wechselrichter, bei dem der bidirektionale DC/DC-Wandler aus einem symmetrischen Tiefsetzsteller mit zusätzlichem Schalter ausgebildet ist.

## FIGURENBESCHREIBUNG

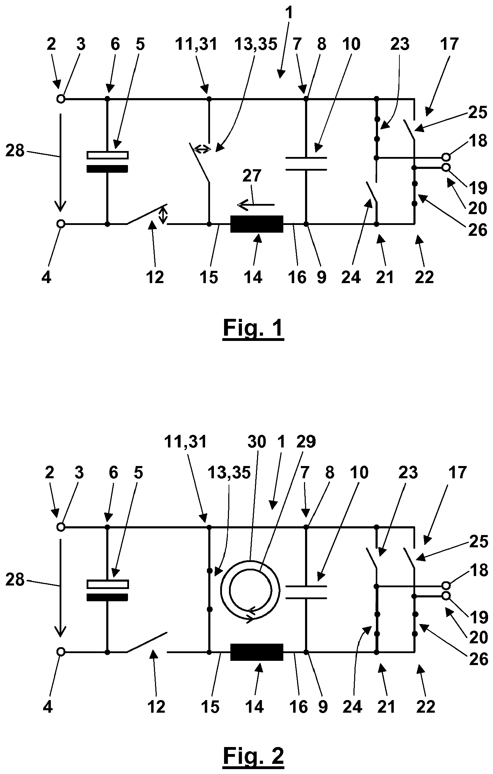

Der in **Fig. 1** dargestellte Wechselrichter 1 weist zwischen einem Gleichstromeingang 2 mit zwei Polen 3 und 4 und mit einem einen Zwischenkreiskondensator 5 aufweisenden Eingangsspannungszwischenkreis 6 und einem nächsten Spannungszwischenkreis 7 mit zwei Polen 8 und 9 sowie einem Zwischenkreiskondensator 10 einen Hochtiefsetzsteller 11 auf. Der Hochtiefsetzsteller 11 umfasst einen Schalter 12, einen weiteren Schalter 13 und eine Speicherdrosseleinrichtung 14 in Form einer einfachen Drossel in einer für einen Hochtiefsetzsteller üblichen Anordnung. Das heißt, über den Schalter 12 ist ein Anschluss 15 der Speicherdrosseleinrichtung 14 mit einem Pol 4 des Gleichstromeingangs 2 verbindbar. Ein anderer Anschluss 16 der Speicherdrosseleinrichtung 14, der an dieselbe Wicklung angeschlossen ist wie der Anschluss 15, ist mit einem Pol 9 des Spannungszwischenkreises 7 verbunden; und der eine Anschluss 15 der Speicherdrosseleinrichtung 14 ist über den weiteren Schalter 13 mit dem anderen Pol 8 des Spannungszwischenkreises 7 verbindbar.

Durch aufeinander abgestimmtes getaktetes Ansteuern der Schalter 12 und 13 kann ein über den Spannungszwischenkreis 7 zu einem Polwender 17 fließender Strom geformt werden. Insbesondere kann ein Wechselstrom halbwellenweise geformt werden, und mit dem Polwender werden zwei Anschlüsse 18 und 19 eines Wechselstromausgangs 20 mit halbwellenweise wechselnder Polarität mit den Polen 8 und 9 verbunden. Der Polwender 17 weist zwei Halbbrücken 21 und 22 mit jeweils zwei Brückenschaltern 23 und 24 bzw. 25 und 26 auf. Während einer Halbwelle einer an dem Wechselstromausgang 20 anliegenden Wechselspannung werden die Brückenschalter 23 und 26 des Polwenders wie dargestellt geschlossen, während der nächsten Halbwelle werden dann die überkreuz angeordneten Brückenschalter 24 und 25 geschlossen, wobei dann die beiden anderen Brückenschalter 23 und 26 offen sind. Wenn der auf diese Weise an dem Wechselstromausgang 20 ausgegebene Wechselstrom mit der Wechselspannung in Phase ist, der Wechselstrom also der Wechselspannung weder vornoch nacheilt und entsprechend kein von null abweichender Phasenverschiebungswinkel vorhanden ist, fließt der Strom während jeder ganzen Halbwelle der Wechselspannung in der in Fig. 1 durch einen Pfeil 27 angedeuteten Richtung durch die Spule 14 und über den Spannungszwischenkreis 7 zu dem Polwender 17. Wenn jedoch der Wechselstrom der Wechselspannung vor- oder nacheilt, d. h. eine Phasenverschiebung zwischen Wechselstrom und Wechselspannung vorliegt, ändert sich die Richtung des Stroms über den Spannungszwischenkreis 7 einmal während jeder Halbwelle der Wechselspannung und zusätzlich am Übergang zwischen den Halbwellen. Letzteres ist notwendig, damit der Strom beim Polaritätswechsel des Polwenders 17 seine Richtung an dem Wechselstromausgang 20 beibehält.

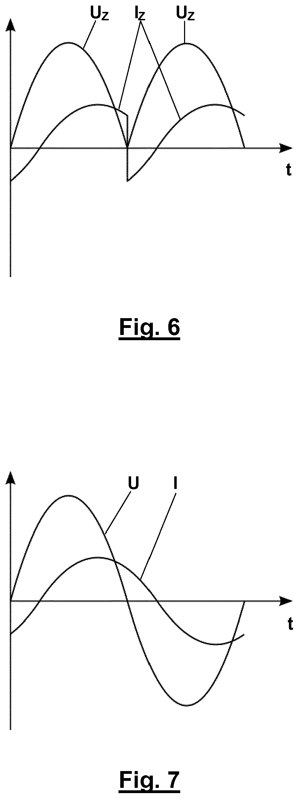

Die Änderung des Stroms $I_Z$, der über den Spannungszwischenkreis 7 fließt, sowie der zugehörige Verlauf der Spannung $U_Z$ an dem Spannungszwischenkreis 7 sind in **Fig. 6** für den Fall dargestellt, dass der von dem Wechselrichter 1 ausgegebene Wechselstrom I der Wechselspannung U an dem Wechselstromausgang 20 nacheilt. Der Verlauf des Wechselstroms I und der Wechselspannung U sind in **Fig. 7** dargestellt. In den Nulldurchgängen der Wechselspannung U gemäß Fig. 7 wechselt der Polwender 17 die Polarität der Anschlüsse 18 und 19 gegenüber den Polen 8 und 9 des Spannungszwischenkreises 7. Damit der Wechselstrom I den sinusförmigen Verlauf gemäß Fig. 7 einhalten kann, muss der Strom $I_Z$ gemäß Fig. 6 im Nulldurchgang der Spannung $U_Z$ sein Vorzeichen ändern und dies bei zunehmendem Phasenverschiebungswinkel zwischen dem Wechselstrom I und der Wechselspannung U bei ansteigender Stromstärke.

Die Umkehr der Richtung des Stroms während der jeweiligen Halbwelle der Wechselspannung ist unabhängig von dem Vorzeichen des Phasenverschiebungswinkels zwischen Wechselstrom und Wechselspannung unkritisch, weil der Wechsel der Richtung bei einer Stromstärke von null erfolgt, d. h. bei einem stetigen Nulldurchgang. Die Umkehrung der Richtung ist auch nicht schwierig, wenn bei einem der Wechselspannung vorauseilenden Wechselstrom ein am Ende jeder Halbwelle bereits negativer Strom in einen positiven Strom in Richtung des Pfeils 27 gemäß Fig. 1 geändert werden muss, weil hierzu eine zwischen den Polen 3 und 4 des Gleichstromeingangs 2 anliegende Eingangsgleichspannung 28 als treibende Kraft genutzt werden kann. Anders verhält es sich, wenn bei einem der Wechselspannung nacheilenden Strom, d. h. bei negativem Phasenverschiebungswinkel wie in den Figuren 6 und 7, die in Fig. 1 mit dem Pfeil 27 angedeutete positive Richtung des Stroms umgekehrt werden muss. Hierfür steht im Nulldurchgang der Wechselspannung an dem Wechselstromausgang 20 keine ausreichende treibende Kraft zur Verfügung. Anders gesagt wird bei der geringen momentanen Spannung an dem Gleichstromausgang 20 eine zur Umkehrung der Richtung des Stroms durch die Speicherdrosseleinrichtung 14 benötigte Spannungszeitfläche nur nach langer Zeit erreicht. Diese Zeit kann jedoch durch das im Folgenden beschriebene Vorgehen verkürzt werden.

Fig. 2 illustriert einen Schaltzustand der Schalter 12 und 13 und der Brückenschalter 23 bis 26 zum Umkehren der Richtung eines positiven Stroms durch die Speicherdrosseleinrichtung 14 binnen kurzer Zeit in einen negativen Strom mit umgekehrter Richtung, aber mit gleicher Stromstärke. Hierzu wird der Spannungszwischenkreis 7 durch Öffnen des Schalters 23 von dem Wechselstromausgang 20 getrennt. Stattdessen wird der Schalter 24 geschlossen, um die beiden Anschlüsse 18 und 19 des Wechselstromausgangs 20 über die Brückenschalter 24 und 26 kurzzuschließen. Alternativ könnte gegenüber der Schaltstellung gemäß Fig. 1 auch der Schalter 26 geöffnet und der Schalter 25 geschlossen werden, um dieselben Effekte des Trennens des Spannungszwischenkreises 7 von dem Wechselstromausgang 20 und des Kurzschließens der Anschlüsse 18 und 19 zu erreichen. Durch das Kurzschließen der Anschlüsse 18 und 19 wird ein Freilaufpfad für den Wechselstrom zwischen den Anschlüssen 18 und 19 bereitgestellt, über den der Wechselstrom zwischen den Anschlüssen 18 und 19 bei der dann anliegenden kleinen Spannung weiter fließen kann. Weiter wird der Schalter 12 geöffnet und der Schalter 13 geschlossen. Hierdurch kommutiert der Strom durch die Speicherdrosseleinrichtung 14 auf den Schalter 13 und lädt beim Stromfluss in Richtung des Drehpfeils 29 den Spannungszwischenkreis 7, d. h. dessen Zwischenkreiskondensator 10, auf. Hierdurch steigt die Zwischenkreisspannung über dem Zwischenkreiskondensator 10 an, bis der Strom auf null zurückgeht und sich anschließend der Spannungszwischenkreis 7 in durch einen Drehpfeil 30 angezeigter umgekehrter Richtung durch die Speicherdrosseleinrichtung 14 wieder entlädt. Wenn diese Entladung abgeschlossen ist, fließt der Strom wie gewünscht mit umgekehrter Richtung aber gleicher Stromstärke wie zuvor durch die Speicherdrosseleinrichtung 14. Der hier geschilderte Vorgang dauert eine halbe Resonanzperiode des durch die Speicherdrosseleinrichtung 14 und den Spannungszwischenkreises 7 gebildeten Resonanzkreises, d. h. $\pi\sqrt{LC}$ , wobei L die Induktivität der Speicherdrosseleinrichtung 14 ist und C die Kapazität des Zwischenkreiskondensators 10 ist. Der derweil über den Freilaufpfad zwischen den Anschlüssen 18 und 19 weiter fließende Wechselstrom bleibt von dem hier geschilderten Vorgang zudem unberührt.

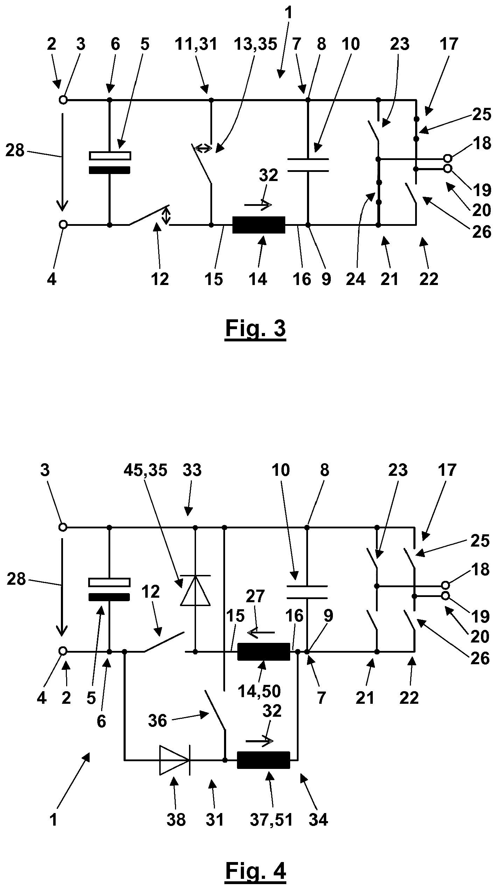

Nach diesem Zeitraum wird der Betrieb des Wechselrichters so aufgenommen, wie er in Fig. 3 skizziert ist. Der Brückenschalter 25 wird geschlossen, und der Brückenschalter 26 des Polwenders 17 wird geöffnet, um den Wechselstromausgang 20 in gegenüber Fig. 1 umgekehrter Polarität an den Spannungszwischenkreis 7 anzuschließen. Während in Fig. 1 der Anschluss 18 mit dem Pol 8 und der Anschluss 19 mit dem Pol 9 verbunden war, ist gemäß Fig. 3 der Anschluss 18 mit dem Pol 9 und der Anschluss 19 mit dem Pol 8 verbunden. Die Schalter 12 und 13 werden wieder aufeinander abgestimmt hochfrequent getaktet, diesmal um den Strom unter Hochsetzen der Spannung zwischen dem Spannungszwischenkreis 7 und dem Eingangsspannungszwischenkreis 6 in der durch einen Pfeil 32 angedeuteten Richtung durch die Speicherdrosseleinrichtung 14, der gemäß Fig. 2 hervorgerufen wurde, weiter fließen zu lassen bzw. an den aktuell geltenden Stromsollwert anzupassen.

Während bei der Ausführungsform des Wechselrichters 1 gemäß den Fig. 1 bis 3 der Hochtiefsetzsteller 11 einen bidirektionalen DC/DC-Wandler 31 zwischen dem Gleichstromeingang 2 und dem Spannungszwischenkreis 7 bildet, wird bei der Ausführungsform des Wechselrichters 1 gemäß Fig. 4 ein solcher bidirektionaler DC/DC-Wandler 31 von der Kombination eines Tiefsetzstellers 33 mit der Speicherdrosseleinrichtung 14 in Form einer Drossel 50 und eines Hochsetzstellers 34 mit einer weiteren Speicherdrosseleinrichtung 37 in Form einer weiteren Drossel 51 ausgebildet, wobei der Tiefsetzsteller 33 von dem Gleichstromeingang 2 zu dem Spannungszwischenkreis 7 ausgerichtet ist, während der Hochsetzsteller 34 in umgekehrter Richtung von dem Spannungszwischenkreis 7 zu dem Gleichstromeingang 2 ausgerichtet ist. Der Tiefsetzsteller 33 entspricht dem Hochtiefsetzsteller 11 gemäß den Fig. 1 bis 3, außer dass eine Diode 45 als Schaltelement 35 vorgesehen ist, über das der Anschluss 15 der Speicherdrosseleinrichtung 14 mit dem Pol 8 des Spannungszwischenkreises 7 verbindbar ist. So kommutiert beim Öffnen des Schalters 12 der Strom durch die Drossel 50 in Richtung des Pfeils 27 auf die Diode 45, ohne dass es hierzu der Betätigung eines Schalters bedarf. Um jedoch den Zwischenkreiskondensator 10 des Spannungszwischenkreises 7 nach seinem Aufladen wieder zu entladen, muss ein weiterer Schalter 36 geschlossen werden. Dieser weitere Schalter 36 ist hier so angeordnet, dass bei seinem Schließen der Spannungszwischenkreis 7 in der Gegenrichtung des Pfeils 32 über die weitere Drossel 51 fließt, die zusammen mit dem Schalter 36 und einer weiteren Diode 38 den Hochsetzsteller 34 ausbildet. Der negative Strom von dem Spannungszwischenkreis 7 zu dem Gleichstromeingang 2 wird also von dem Hochsetzsteller 34 geführt, während der positive Strom von dem Tiefsetzsteller 33 geführt wird. Der noch relativ hohe Strom in Richtung des Pfeils 27 durch die Drossel 50 am Ende der jeweiligen Halbwelle der Wechselspannung und damit am Ende des Betriebs des Tiefsetzstellers 33 wird hier unter Zwischenspeicherung der elektrischen Energie in dem Spannungszwischenkreis 7 genutzt, um die weitere Drossel 51 des Hochsetzstellers 34 mit dem Strom in der umgekehrten Richtung gemäß dem Pfeil 32 für dessen Betrieb zu Beginn der nächsten Halbwelle der Wechselspannung vorzuladen.

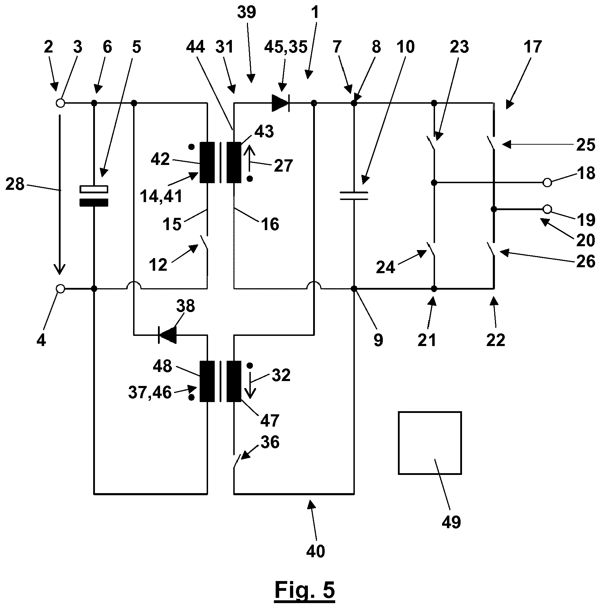

**Fig. 5** zeigt eine Ausführungsform des Wechselrichters 1, bei der der bidirektionale DC/DC-Wandler 31 zwischen dem Gleichstromeingang 2 und dem Spannungszwischenkreis 7 durch zwei Sperrwandler 39 und 40 miteinander entgegengesetzten Sperrrichtungen ausgebildet ist. Dabei umfasst die Speicherdrosseleinrichtung 14 einen Speichertransformator 41 des Sperrwandlers 39 mit zwei magnetisch gekoppelten Wicklungen 42 und 43. An die Wicklung 42 ist der Anschluss 15 der Speicherdrosseleinrichtung 14 angeschlossen, der über den Schalter 12 mit dem Pol 4 des Gleichstromeingangs 2 verbindbar ist. An die Wicklung 43 ist der Anschluss 16 der Speicherdrosseleinrichtung 14 angeschlossen, der mit dem Pol 9 des Spannungszwischenkreises 7 verbunden ist. Weiterhin ist ein Anschluss 44 an die zweite Wicklung 43 angeschlossen, der über das Schaltelement 35, auch hier in Form einer Diode 45, an den Pol 8 des Spannungszwischenkreises 7 anschließbar ist. Entsprechend umfasst die weitere Speicherdrosseleinrichtung 37 einen Speichertransformator 46 des weiteren Sperrwandlers 40 und weist zwei Wicklungen 47 und 48 auf. Hier ist an die Wicklung 47 der weitere Schalter 36 und an die Wicklung 48 die weitere Diode 38 angeschlossen. Beim Übergang zwischen zwei Halbwellen der Wechselspannung an dem Wechselstromausgang 20 wird durch Öffnen des Schalters 12 und entsprechenden Stromfluss durch die Wicklung 43 in Richtung des Pfeils 27 der Spannungszwischenkreis 7 aufgeladen, der dann durch Schließen des Schalters 36 zum Hervorrufen eines Stroms gleicher Stromstärke in Richtung des Pfeils 32 durch die Wicklung 47 der weiteren Speicherdrosseleinrichtung 37 entladen wird. Dadurch kann der weitere Sperrwandler 40 sofort mit diesem Strom durch die Wicklung 47 und damit von dem Spannungszwischenkreis 7 zu dem Gleichstromeingang 2 beginnend seinen Betrieb zu Anfang der nächsten Halbwelle der Wechselspannung aufnehmen, nachdem der Polwender 17 die Polarität des Wechselstromausgangs 20 gegenüber dem Spannungszwischenkreis 7 geändert hat. Während des Verlaufs dieser Halbwelle wechselt dann beim nächsten Nulldurchgang des Stroms der Stromfluss von dem Sperrwandler 40 zurück auf den Sperrwandler 39. Dies erfolgt jedoch bei einer Stromstärke von null und ist von daher unproblematisch.

Weiterhin zeigt Fig. 5 eine Betriebssteuerung 49, die den Betrieb des Wechselrichters steuert und damit insbesondere das Öffnen und Schließen der Schalter 12 und 36 sowie der Brückenschalter 23 bis 26.

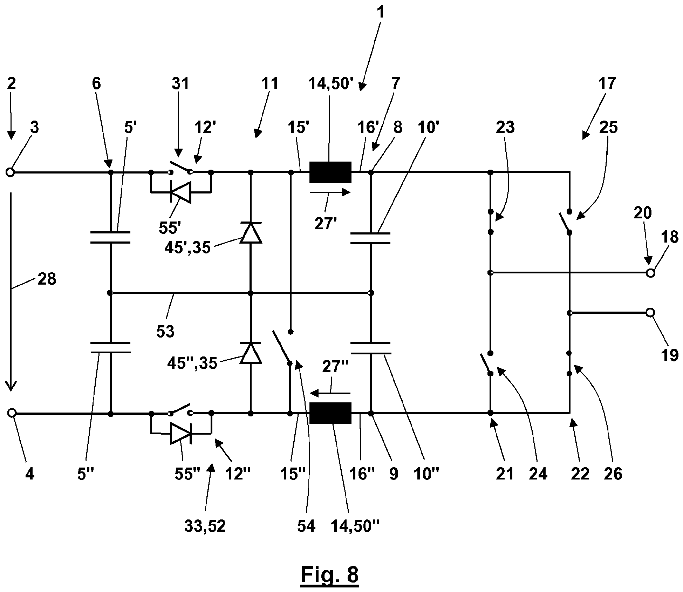

In **Fig. 8** ist als Ausführungsbeispiel für einen bidirektionalen DC/DC-Wandler 31 des Wechselrichters 1 ein symmetrischer Tiefsetzsteller 52 mit einem zusätzlichen Schalter 54 dargestellt. Der symmetrische Tiefsetzsteller ist symmetrisch zu einer Mittelleitung 53 ausgebildet. Die Mittelleitung 53 verbindet einen Mittelpunkt des Eingangszwischenkreises 6, der hier zwei Zwischenkreiskondensatoren 5' und 5" vorzugsweise gleicher Kapazität aufweist und einen Mittelpunkt des Spannungszwischenkreises 9, der hier ebenfalls zwei Zwischenkreiskondensatoren 10' und 10" aufweist. Dabei sind zwei Schalter 12' und 12", zwei Drosseln 50', 50" und zwei Dioden 45', 45" bis auf die Durchlassrichtungen der Dioden 45' und 45" sowie Durchlassrichtungen der Schalter 12' und 12" sowie von antiparallelen Dioden 55' und 55" der Schalter 12' und 12" symmetrisch zu der Mittelleitung 53 angeordnet, wobei der Mittelpunkt zwischen den Dioden 45' und 45" mit der Mittelleitung 53 verbunden ist. Ein Wechselrichter 1 mit einem solchen symmetrischen Tiefsetzsteller und ausgangsseitigem Polwender 17 ist zum Beispiel aus der DE 10 2010 035 020 A1 bekannt. Der bekannte Wechselrichter ist aber entgegen den Aussagen in der DE 10 2010 035 020 A1 nur sehr eingeschränkt blindleistungsfähig. Bei dem Wechselrichter 1 gemäß Fig. 8 wird hingegen uneingeschränkte Blindleistungsfähigkeit durch den zusätzlichen Schalter 54 erreicht. Er kann als Hochsetzstellerschalter genutzt werden, wobei dann die antiparallelen Dioden 55' und 55" der geöffneten Schalter 12' und 12" als Hochsetzstellerdioden wirken. Zudem kann mit dem Schalter 54 die Umkehr der Richtung des Stroms durch die Drosseln 50' und 50" gemäß den Pfeilen 27' und 27" erfindungsgemäß bewirkt werden, indem der Schalter 54 für eine halbe Resonanzperiode geschlossen wird. Dabei bildet sich ein einziger Resonanzkreis über die Drosseln 50' und 50" und die Zwischenkreiskondensatoren 10' und 10" aus. Durch die Ergänzung des einen Schalters 54 kann daher bei einem grundsätzlich bekannten Wechselrichter Blindleistungsfähigkeit mit geringem Klirrfaktor bereitgestellt werden.

**BEZUGSZEICHENLISTE**

| | |
|---|---|
| 1 | Wechselrichter |
| 2 | Gleichstromanschluss |
| 3 | Pol |
| 4 | Pol |
| 5 | Zwischenkreiskondensator |
| 5' | Zwischenkreiskondensator |
| 5" | Zwischenkreiskondensator |
| 6 | Eingangsspannungszwischenkreis |
| 7 | Spannungszwischenkreis |
| 8 | Pol |
| 9 | Pol |
| 10 | Zwischenkreiskondensator |
| 10' | Zwischenkreiskondensator |
| 10" | Zwischenkreiskondensator |
| 11 | Hochtiefsetzsteller |
| 12 | Schalter |
| 12' | Schalter |
| 12" | Schalter |
| 13 | Schalter |
| 14 | Speicherdrosseleinrichtung |
| 15 | Anschluss |
| 16 | Anschluss |
| 17 | Polwender |
| 18 | Anschluss |
| 19 | Anschluss |
| 20 | Wechselstromausgang |
| 21 | Halbbrücke |
| 22 | Halbbrücke |
| 23 | Brückenschalter |
| 24 | Brückenschalter |
| 25 | Brückenschalter |
| 26 | Brückenschalter |
| 27 | Pfeil |
| 28 | Eingangsgleichspannung |
| 29 | Drehpfeil |
| 30 | Drehpfeil |
| 31 | DC/DC-Wandler |
| 32 | Pfeil |
| 33 | Tiefsetzsteller |
| 34 | Hochsetzsteller |
| 35 | Schaltelement |
| 36 | Schalter |
| 37 | Speicherdrosseleinrichtung |
| 38 | Diode |
| 39 | Sperrwandler |
| 40 | Sperrwandler |
| 41 | Speichertransformator |
| 42 | Wicklung |
| 43 | Wicklung |
| 44 | Anschluss |
| 45 | Diode |
| 45' | Diode |
| 45" | Diode |
| 46 | Speichertransformator |

| | |
|---|---|
| 47 | Wicklung |
| 48 | Wicklung |
| 49 | Betriebssteuerung |
| 50 | Drossel |
| 50' | Drossel |
| 50" | Drossel |
| 51 | Drossel |
| 52 | symmetrischer Tiefsetzsteller |
| 53 | Mittelleitung |
| 54 | Schalter |
| 55' | antiparallele Diode |
| 55" | antiparallele Diode |
| L | Induktivität |
| C | Kapazität |
| $U_Z$ | Spannung am Spannungszwischenkreis 7 |
| $I_Z$ | Strom über den Spannungszwischenkreis 7 |
| U | Wechselspannung am Wechselstromausgang 20 |
| I | Wechselstrom über den Wechselstromausgang 20 |

**Patentansprüche**

1. Verfahren zum Betreiben eines blindleistungsfähigen Wechselrichters (1) mit

   - einem Spannungszwischenkreis (7),
   - einem bidirektionalen DC/DC Wandler (31) mit mindestens einer Speicherdrosseleinrichtung (14) und
   - einem Polwender (17),

   wobei ein Strom über den Spannungszwischenkreis (7) mit dem bidirektionalen DC/DC-Wandler (31) geformt wird,
   wobei Pole (8, 9) des Spannungszwischenkreises (7) mittels des Polwenders (17) in unterschiedlichen Konfigurationen mit Anschlüssen (18, 19) eines Wechselstromausgangs (20) verbindbar sind, um eine Polarität des Wechselstromausgangs (20) gegenüber dem Spannungszwischenkreis (7) zu ändern,
   wobei das Verfahren bei einer Phasenverschiebung zwischen Wechselstrom (I) und Wechselspannung (U) an dem Wechselstromausgang (20) ein Umkehren der Richtung des über den Spannungszwischenkreis (7) fließenden Stroms umfasst,
   **dadurch gekennzeichnet, dass** das Umkehren der Richtung des über den Spannungszwischenkreis (7) fließenden Stroms die Schritte umfasst:

   - Trennen des Wechselstromausgangs (20) von dem Spannungszwischenkreis (7),
   - Bereitstellen eines Freilaufpfads zwischen den Anschlüssen (18, 19) des Wechselstromausgangs (20), während der Wechselstromausgang (20) von dem Spannungszwischenkreis (7) getrennt ist,

- Aufladen des Spannungszwischenkreises (7) mit dem durch die Speicherdrosseleinrichtung (14) fließenden Strom und
- Entladen des Spannungszwischenkreises (7) über die Speicherdrosseleinrichtung (14) oder über eine weitere Speicherdrosseleinrichtung (37),
- Wiederverbinden des Wechselstromausgangs (20) mit dem Spannungszwischenkreis (7) bei mit dem Polwender (17) geänderter Polarität des Wechselstromausgangs (20) gegenüber dem Spannungszwischenkreis (7).

2. Verfahren nach Anspruch 1, **dadurch gekennzeichnet, dass** der Wechselstromausgang (20) durch Öffnen von Brückenschaltern (23 bis 26) des Polwenders (17) von dem Spannungszwischenkreis (7) getrennt wird und/oder die Anschlüsse (18, 19) des Wechselstromausgangs (20) zum Bereitstellen des Freilaufpfads über Brückenschalter (23 bis 26) des Polwenders (17) kurzgeschlossen werden.

3. Verfahren nach Anspruch 2, **dadurch gekennzeichnet, dass** der Spannungszwischenkreis (7) zwei Pole aufweist und dass zum Trennen des Wechselstromausgangs (20) von dem Spannungszwischenkreis (7) und zum Kurzschließen der Anschlüsse (18, 19) des Wechselstromausgangs (20) Brückenschalter (23, 25) des Polwenders (17), die mit demselben Pol (8) des Spannungszwischenkreises (7) verbunden sind, geöffnet und die anderen Brückenschalter (24, 26) des Polwenders (17) geschlossen werden.

4. Verfahren nach einem der Ansprüche 1 bis 3, **dadurch gekennzeichnet, dass** bei der Phasenverschiebung der Wechselstrom (I) der Wechselspannung (U) an dem Wechselstromausgang (20) nacheilt.

5. Verfahren nach einem der Ansprüche 1 bis 4, wobei der bidirektionale DC/DC-Wandler mindestens eine Speicherdrosseleinrichtung (14) aufweist, wobei

    - ein Anschluss (15) der Speicherdrosseleinrichtung (14) über einen Schalter (12) mit einem Pol (4) eines Gleichstromeingangs (2) verbindbar ist,
    - ein anderer Anschluss (16) der Speicherdrosseleinrichtung (14) mit einem Pol (9) des Spannungszwischenkreises (7) verbunden ist und
    - der eine oder ein weiterer, an dieselbe Wicklung (43) der Speicherdrosseleinrichtung (14) wie der andere Anschluss (16) angeschlossene(r) Anschluss (15, 44) der Speicherdrosseleinrichtung (14) über ein Schaltelement (35) mit dem anderen Pol (8) des Spannungszwischenkreises (7) verbindbar ist,

**dadurch gekennzeichnet, dass** das Umkehren der Richtung des über den Spannungszwischenkreis (7) fließenden Stroms bei der Wechselspannung (U) an dem Wechselstromausgang (20) nacheilendem Wechselstrom (I) weiterhin die Schritte umfasst:

    - Aufladen des Spannungszwischenkreises (7) mit dem durch die Speicherdrosseleinrichtung (14) fließenden Strom und
    - Entladen des Spannungszwischenkreises (7) über die Speicherdrosseleinrichtung (14) oder über eine weitere Speicherdrosseleinrichtung (37).

6. Verfahren nach Anspruch 5, **dadurch gekennzeichnet, dass** der Schalter (12), der den einen Anschluss (15) der Speicherdrosseleinrichtung (14) mit dem Gleichstromeingang (2) verbindet, geöffnet wird, um den Spannungszwischenkreis (7) mit dem durch die Speicherdrosseleinrichtung (14) fließenden und auf das Schaltelement (35) kommutierenden Strom aufzuladen.

7. Verfahren nach Anspruch 5 oder 6, **dadurch gekennzeichnet, dass** der DC/DC-Wandler (31) nach dem Wiederverbinden des Spannungszwischenkreises (7) mit dem Wechselstromausgang (20) so betrieben wird, dass ein Strom, der beim Entladen des Spannungszwischenkreises (7) durch die Speicherdrosseleinrichtung (14) oder die weitere Speicherdrosseleinrichtung (37) hervorgerufen wurde, weiter fließt.

8. Verfahren nach einem der Ansprüche 5 bis 7, **dadurch gekennzeichnet, dass** das Schaltelement (35) ein weiterer Schalter (13) ist, der zum Auf- und Entladen des Spannungszwischenkreises (7) für eine halbe Resonanzperiode eines durch die Speicherdrosseleinrichtung (14) und den Spannungszwischenkreis (7) gebildeten Resonanzkreises geschlossen wird.

9. Verfahren nach einem der Ansprüche 5 bis 7, **dadurch gekennzeichnet, dass** das Schaltelement (35) eine Diode (45) ist, wobei ein weiterer Schalter (36) vorgesehen ist, der zum Entladen des Spannungszwischenkreises (7) über die Speicherdrosseleinrichtung (14) oder die weitere Speicherdrosseleinrichtung (37) für eine viertel Resonanzperiode des durch die Speicherdrosseleinrichtung (14) oder die weitere Speicherdrosseleinrichtung (37) und den Spannungszwischenkreis (7) gebildeten Resonanzkreises geschlossen wird.

10. Blindleistungsfähiger Wechselrichter (1) mit

    - einem bidirektionalen DC/DC-Wandler (31) mit mindestens einer Speicherdrosseleinrichtung (14),
- einem Spannungszwischenkreis (7),
- einem Polwender (17) und
- einer Betriebssteuerung (49),

wobei der Polwender (17) zwischen Pole (8, 9) des Spannungszwischenkreises (7) und Anschlüsse (18, 19) eines Wechselstromausgangs (20) geschaltet ist,
**dadurch gekennzeichnet, dass** die Betriebssteuerung (49) dazu eingerichtet ist, dass sie den Wechselrichter (1) nach dem Verfahren nach einem der vorhergehenden Ansprüche betreibt.

11. Wechselrichter (1) nach Anspruch 10, **dadurch gekennzeichnet, dass**

- ein Anschluss (15) der Speicherdrosseleinrichtung (14) über einen Schalter (12) mit einem Pol (4) eines Gleichstromeingangs (2) verbindbar ist,
- ein anderer Anschluss (16) der Speicherdrosseleinrichtung (14) mit einem Pol (9) des Spannungszwischenkreises (7) verbunden ist und
- der eine oder ein weiterer, an dieselbe Wicklung der Speicherdrosseleinrichtung (14) wie der andere Anschluss (16) angeschlossene(r) Anschluss (15, 44) der Speicherdrosseleinrichtung (14) über ein Schaltelement (35) mit dem anderen Pol (8) des Spannungszwischenkreises (7) verbindbar ist.

12. Wechselrichter (1) nach Anspruch 11, **dadurch gekennzeichnet, dass** die Speicherdrosseleinrichtung (14) eine Drossel (50) eines von dem Gleichstromeingang (2) zu dem Spannungszwischenkreis (7) ausgerichteten Tiefsetzstellers (33) umfasst, wobei optional eine weitere Speicherdrosseleinrichtung (37) eine weitere Drossel (51) eines von dem Spannungszwischenkreis (7) zu dem Gleichstromeingang (2) ausgerichteten Hochsetzstellers (34) umfasst, wobei optional Induktivitäten (L) der Speicherdrosseleinrichtung (14) und der weiteren Speicherdrosseleinrichtung (37) gleich groß sind.

13. Wechselrichter (1) nach Anspruch 11, **dadurch gekennzeichnet, dass** die Speicherdrosseleinrichtung (14) einen Speichertransformator (41) eines Sperrwandlers (39) mit Sperrrichtung von dem Spannungszwischenkreis (7) zu dem Gleichstromeingang (2) und eine weitere Speicherdrosseleinrichtung (37) einen weiteren Speichertransformator (46) eines weiteren Sperrwandlers (40) mit Sperrrichtung von dem Gleichstromeingang (2) zu dem Spannungszwischenkreis (7) umfasst, wobei optional Induktivitäten (L) der Speicherdrosseleinrichtung (14) und der weiteren Speicherdrosseleinrichtung (37) gleich groß sind.

14. Wechselrichter (1) nach Anspruch 13 oder nach Anspruch 12, soweit die weitere Speicherdrosseleinrichtung (37) eine weitere Drossel (51) eines von dem Spannungszwischenkreis (7) zu dem Gleichstromeingang (2) ausgerichteten Hochsetzstellers (34) umfasst, **dadurch gekennzeichnet, dass** ein Anschluss der weiteren Speicherdrosseleinrichtung (37) über ein zusätzliches Schaltelement an einen Pol (3, 4) des Gleichstromeingangs (2) oder an einen Pol eines Zwischenspeichers für elektrische Energie anschließbar ist.

15. Wechselrichter (1) nach Anspruch 12, **dadurch gekennzeichnet, dass** der Tiefsetzsteller (33) ein symmetrischer Tiefsetzsteller (52) ist mit zwei zu einer Mittelleitung (53) symmetrisch angeordneten Schaltern (12' und 12") mit antiparallelen Dioden (55' und 55"), zwei zu der Mittelleitung (53) symmetrisch angeordneten Drosseln (50', 50") und zwei zu der Mittelleitung (53) symmetrisch angeordneten Dioden (45' und 45"), wobei die Mittelleitung (53) Mittelpunkte eines Eingangsspannungszwischenkreises (6), Mittelpunkte zwischen den Dioden (45' und 45") und Mittelpunkte des Spannungszwischenkreises (7) verbindet und wobei parallel zu den Dioden (45' und 45") und ohne direkten Anschluss an die Mittelleitung (53) ein Schalter (54) geschaltet ist.

**Claims**

1. A method for operating a reactive power inverter (1) with

- an intermediate voltage circuit (7),
- a bidirectional DC/DC converter (31) with at least one storage choke device (14) and
- a polarity reverser (17),

wherein a current via the intermediate voltage circuit (7) is formed by the bidirectional DC/DC converter (31),
poles (8, 9) of the intermediate voltage circuit (7) being connectable to terminals (18, 19) of an AC output (20) by means of the polarity reverser (17) in different configurations in order to change a polarity of the AC output (20) with respect to the intermediate voltage circuit (7),
the method comprising reversing the direction of the current flowing across the intermediate voltage circuit (7) in case of a phase shift between alternating current (I) and alternating voltage (U) at the AC output (20),
**characterized in that** reversing the direction of the current flowing across the intermediate voltage circuit (7) comprises the steps:

- disconnecting the AC output (20) from the intermediate voltage circuit (7),
- providing a freewheeling path between the terminals (18, 19) of the AC output (20) while the AC output (20) is disconnected from the intermediate voltage circuit (7),
- charging the intermediate voltage circuit (7) with the current flowing through the storage choke device (14), and
- discharging the intermediate voltage circuit (7) via the storage choke device (14) or via a further storage choke device (37),
- reconnecting the AC output (20) to the intermediate voltage circuit (7) with the polarity of the AC output (20) with respect to the intermediate voltage circuit (7) being changed by the polarity reverser (17).

2. The method according to claim 1, **characterized in that** the AC output (20) is disconnected from the intermediate voltage circuit (7) by opening bridge switches (23 to 26) of the polarity reverser (17) and/or the terminals (18, 19) of the AC output (20) are short-circuited in order to provide the freewheeling path via bridge switches (23 to 26) of the polarity reverser (17).

3. The method according to claim 2, **characterized in that** the intermediate voltage circuit (7) has two poles and **in that** bridge switches (23, 25) of the polarity reverser (17) that are connected to the same pole (8) of the intermediate voltage circuit (7) are opened and the other bridge switches (24, 26) of the polarity reverser (17) are closed in order to disconnect the AC output (20) from the intermediate voltage circuit (7) and to short-circuit the terminals (18, 19) of the AC output (20).

4. The method according to any one of claims 1 to 3, **characterized in that** in case of the phase shift the alternating current (I) lags behind the alternating voltage (U) at the AC output (20).

5. The method according to any one of claims 1 to 4, wherein the bidirectional DC/DC converter comprises at least one storage choke device (14), wherein

- one terminal (15) of the storage choke device (14) is connectable via a switch (12) to a pole (4) of a DC input (2),
- another terminal (16) of the storage choke device (14) is connected to a pole (9) of the intermediate voltage circuit (7) and
- the one or a further terminal (15, 44) of the storage choke device (14) connected to the same winding (43) of the storage choke device (14) as the other terminal (16) is connectable via a switching element (35) to the other pole (8) of the voltage intermediate circuit (7),

**characterized in that** reversing the direction of the current flowing across the intermediate voltage circuit (7) in case of the alternating current (I) lagging behind the alternating voltage (U) at the AC output (20) further comprises the steps:

- charging the intermediate voltage circuit (7) with the current flowing through the storage choke device (14), and
- discharging the intermediate voltage circuit (7) via the storage choke device (14) or via a further storage choke device (37).

6. The method according to claim 5, **characterized in that** the switch (12) connecting the one terminal (15) of the storage choke device (14) to the DC input (2) is opened in order to charge the intermediate voltage circuit (7) with the current flowing through the storage choke device (14) and commutating to the switching element (35).

7. The method according to claim 5 or 6, **characterized in that** after reconnecting the intermediate voltage circuit (7) to the AC output (20) the DC/DC converter (31) is operated such that a current caused by the storage choke device (14) or the further storage choke device (37) during discharge of the intermediate voltage circuit (7) continues to flow.

8. The method according to any one of claims 5 to 7, **characterized in that** the switching element (35) is a further switch (13) closed for charging and discharging the intermediate voltage circuit (7) for half a resonance period of a resonance circuit formed by the storage choke device (14) and the intermediate voltage circuit (7).

9. The method according to any one of claims 5 to 7, **characterized in that** the switching element (35) is a diode (45), wherein a further switch (36) is provided that is closed for discharging the intermediate voltage circuit (7) via the storage choke device (14) or the further storage choke device (37) for a quarter of a resonant period of the resonant circuit formed by the storage choke device (14) or the further storage choke device (37) and the intermediate voltage circuit (7).

10. A reactive power inverter (1) with

- a bidirectional DC/DC converter (31) having at least one storage choke device (14),
- an intermediate voltage circuit (7),
- a polarity reverser (17) and
- an operation controller (49),

the polarity reverser (17) being connected between poles (8, 9) of the intermediate voltage circuit (7) and terminals (18, 19) of an AC output (20),
**characterized in that** the operation controller (49) is arranged to operate the inverter (1) according to the method according to one of the preceding claims.

11. The inverter (1) according to claim 10, **characterized in that**

- one terminal (15) of the storage choke device (14) is connectable via a switch (12) to a pole (4) of a DC input (2),
- another terminal (16) of the storage choke device (14) is connected to a pole (9) of the intermediate voltage circuit (7) and
- the one or a further terminal (15, 44) of the storage choke device (14) connected to the same winding of the storage choke device (14) as the other terminal (16) is connectable via a switching element (35) to the other pole (8) of the voltage intermediate circuit (7).

12. The inverter (1) according to claim 11, **characterized in that** the storage choke device (14) comprises a choke (50) of a step-down converter (33) oriented from the DC input (2) to the intermediate voltage circuit (7), wherein optionally a further storage choke device (37) comprises a further choke (51) of a step-up converter (34) oriented from the intermediate voltage circuit (7) to the DC input (2), wherein optionally inductances (L) of the storage choke device (14) and the further storage choke device (37) are equal in magnitude.

13. The inverter (1) according to claim 11, **characterized in that** the storage choke device (14) comprises a storage transformer (41) of a flyback converter (39) with a blocking direction from the intermediate voltage circuit (7) to the DC input (2) and a further storage choke device (37) comprises a further storage transformer (46) of a further flyback converter (40) with a blocking direction from the DC input (2) to the intermediate voltage circuit (7), wherein optionally inductances (L) of the storage choke device (14) and the further storage choke device (37) are equal in magnitude.

14. The inverter (1) according to claim 13 or according to claim 12, as far as the further storage choke device (37) comprises a further choke (51) of a step-up converter (34) oriented from the intermediate voltage circuit (7) to the DC input (2), **characterized in that** a terminal of the further storage choke device (37) is connectable via an additional switching element to a pole (3, 4) of the DC input (2) or to a pole of a buffer for electrical energy.

15. The inverter (1) according to claim 12, **characterized in that** the step-down converter (33) is a symmetrical step-down converter (52) having two switches (12' and 12") arranged symmetrically with respect to a central line (53) and having antiparallel diodes (55' and 55"), two chokes (50', 50") arranged symmetrically with respect to the central line (53), and two diodes (45' and 45") arranged symmetrically to the central line (53), wherein the central line (53) connects midpoints of an input voltage intermediate circuit (6), midpoints between the diodes (45' and 45") and midpoints of the voltage intermediate circuit (7), and wherein a switch (54) is connected in parallel with the diodes (45' and 45") and without direct connection to the central line (53).

## Revendications

1. Procédé de fonctionnement d'un onduleur de puissance réactive (1) avec

- un circuit de tension intermédiaire (7),
- un convertisseur CC/CC bidirectionnel (31) ayant au moins un dispositif d'inductance de stockage (14) et
- un inverseur de polarité (17),

dans lequel un courant via le circuit de tension intermédiaire (7) est formé par le convertisseur CC/CC bidirectionnel (31),
les pôles (8, 9) du circuit de tension intermédiaire (7) pouvant être connectés au moyen de l'inverseur de polarité (17) dans différentes configurations aux bornes (18, 19) d'une sortie CA (20) afin de modifier une polarité de la sortie CA (20) par rapport au circuit de tension intermédiaire (7),
le procédé comprenant l'inversion de la direction du courant circulant à travers le circuit de tension intermédiaire (7) dans le cas d'un déphasage entre le courant alternatif (I) et la tension alternative (U) à la sortie CA (20),
**caractérisé en ce que** l'inversion de la direction du courant circulant à travers le circuit de tension intermédiaire (7) comprend les étapes :

- déconnecter la sortie CA (20) du circuit de tension intermédiaire (7),
- fournir un chemin de roue libre entre les bornes (18, 19) de la sortie CA (20) tandis que la sortie CA (20) est déconnectée du circuit de tension intermédiaire (7),
- charger le circuit de tension intermédiaire (7) avec le courant circulant à travers le dispositif d'inductance de stockage (14), et
- décharger le circuit de tension intermédiaire (7) par l'intermédiaire du dispositif d'inductance de stockage (14) ou d'un dispositif d'inductance de stockage supplémentaire (37),
- reconnecter la sortie CA (20) au circuit de tension intermédiaire (7) lorsque la polarité de la sortie CA (20) par rapport au circuit de tension intermédiaire (7) est modifiée par l'inverseur de polarité (17).

2. Procédé selon la revendication 1, **caractérisé en ce que** la sortie CA (20) est déconnectée du circuit de tension intermédiaire (7) par l'ouverture de commutateurs en pont (23 à 26) de l'inverseur de polarité (17) et/ou les bornes (18, 19) de la sortie CA (20) sont court-circuitées pour fournir le chemin de roue libre par des commutateurs en pont (23 à 26) de l'inverseur de polarité (17).

3. Procédé selon la revendication 2, **caractérisé en ce que** le circuit de tension intermédiaire (7) comporte deux pôles et **en ce que** des commutateurs en pont (23, 25) de l'inverseur de polarité (17) raccordés au même pôle (8) du circuit de tension intermédiaire (7) sont ouverts et les autres commutateurs en pont (24, 26) de l'inverseur de polarité (17) sont fermés pour déconnecter la sortie CA (20) du circuit de tension intermédiaire (7) et pour court-circuiter les bornes (18, 19) de la sortie CA (20).

4. Procédé selon l'une quelconque des revendications 1 à 3, **caractérisé en ce que**, dans le cas du déphasage, le courant alternatif (I) est en retard par rapport à la tension alternative (U) á la sortie CA (20).

5. Procédé selon l'une quelconque des revendications 1 à 4, dans lequel le convertisseur CC/CC bidirectionnel comprend au moins un dispositif d'inductance de stockage (14), dans lequel

> - une borne (15) du dispositif d'inductance de stockage (14) peut être raccordée via un commutateur (12) à un pôle (4) d'une entrée CC (2),
> - une autre borne (16) du dispositif d'inductance de stockage (14) est raccordée à un pôle (9) du circuit de tension intermédiaire (7) et
> - l'une ou une autre borne (15, 44) du dispositif d'inductance de stockage (14) raccordée au même enroulement (43) du dispositif d'inductance de stockage (14) que l'autre borne (16) peut être raccordée via un élément de commutation (35) à l'autre pôle (8) du circuit intermédiaire en tension (7),

> **caractérisé en ce que** l'inversion de la direction du courant circulant à travers le circuit de tension intermédiaire (7) dans le cas du courant alternatif (I) est en retard par rapport à la tension alternative (U) à la sortie CA (20) comprend en outre les étapes :

> - charger le circuit de tension intermédiaire (7) avec le courant circulant à travers le dispositif d'inductance de stockage (14), et

> - décharger le circuit de tension intermédiaire (7) par l'intermédiaire du dispositif d'inductance de stockage (14) ou d'un dispositif d'inductance de stockage supplémentaire (37).

6. Procédé selon la revendication 5, **caractérisé en ce que** le commutateur (12) raccordant l'une borne (15) du dispositif d'inductance de stockage (14) à l'entrée CC (2) est ouvert pour charger le circuit de tension intermédiaire (7) avec le courant circulant à travers le dispositif d'inductance de stockage (14) et commutant sur l'élément de commutation (35).

7. Procédé selon la revendication 5 ou 6, **caractérisé en ce que** le convertisseur CC/CC (31), après avoir reconnecté le circuit de tension intermédiaire (7) à la sortie CA (20), est exploité de telle sorte qu'un courant provoqué par le dispositif d'inductance de stockage (14) ou le dispositif d'inductance de stockage supplémentaire (37) pendant la décharge du circuit de tension intermédiaire (7) continue à circuler.

8. Procédé selon l'une quelconque des revendications 5 à 7, **caractérisé en ce que** l'élément de commutation (35) est un autre commutateur (13) fermé pour charger et décharger le circuit de tension intermédiaire (7) pendant une demi-période de résonance d'un circuit de résonance formé par le dispositif d'inductance de stockage (14) et le circuit de tension intermédiaire (7).

9. Procédé selon l'une quelconque des revendications 5 à 7, **caractérisé en ce que** l'élément de commutation (35) est une diode (45), dans lequel un autre commutateur (36) est prévu qui est fermé pour décharger le circuit de tension intermédiaire (7) par l'intermédiaire du dispositif d'inductance de stockage (14) ou du dispositif d'inductance de stockage supplémentaire (37) pendant un quart d'une période résonante du circuit de résonance formé par le dispositif d'inductance de stockage (14) ou le dispositif d'inductance de stockage supplémentaire (37) et le circuit de tension intermédiaire (7).

10. Onduleur de puissance réactive (1) avec

> - un convertisseur CC/CC bidirectionnel (31) ayant au moins un dispositif d'inductance de stockage (14),
> - un circuit de tension intermédiaire (7),
> - un inverseur de polarité (17) et
> - un contrôleur de fonctionnement (49),

l'inverseur de polarité (17) étant connecté entre les pôles (8, 9) du circuit de tension intermédiaire (7) et les bornes (18, 19) d'une sortie CA (20), **caractérisé en ce que** le contrôleur de fonctionnement (49) est agencé pour faire fonctionner l'onduleur (1) selon le procédé selon l'une des revendications précédentes.

11. Onduleur (1) selon la revendication 10, **caractérisé en ce que**

    - une borne (15) du dispositif d'inductance de stockage (14) peut être raccordée via un commutateur (12) à un pôle (4) d'une entrée CC (2),
    - une autre borne (16) du dispositif d'inductance de stockage (14) est raccordée à un pôle (9) du circuit de tension intermédiaire (7) et
    - l'une ou une autre borne (15, 44) du dispositif d'inductance de stockage (14) raccordée au même enroulement du dispositif d'inductance de stockage (14) que l'autre borne (16) peut être raccordée à l'autre pôle (8) du circuit intermédiaire en tension (7) via un élément de commutation (35).

12. Onduleur (1) selon la revendication 11, **caractérisé en ce que** le dispositif d'inductance de stockage (14) comprend une inductance (50) d'un convertisseur abaisseur (33) orienté de l'entrée CC (2) au circuit de tension intermédiaire (7), dans lequel, en option, un dispositif d'inductance de stockage supplémentaire (37) comprend une autre inductance (51) d'un convertisseur élévateur (34) orienté du circuit de tension intermédiaire (7) à l'entrée CC (2), dans lequel, en option, les inductances (L) du dispositif d'inductance de stockage (14) et du dispositif d'inductance de stockage supplémentaire (37) sont égales en amplitude.

13. Onduleur (1) selon la revendication 11, **caractérisé en ce que** le dispositif d'inductance de stockage (14) comprend un transformateur de stockage (41) d'un convertisseur á transfert indirect (39) avec une direction de blocage du circuit de tension intermédiaire (7) vers l'entrée CC (2) et un dispositif d'inductance de stockage supplémentaire (37) comprend un autre transformateur de stockage (46) d'un autre convertisseur á transfert indirect (40) avec une direction de blocage de l'entrée CC (2) vers le circuit intermédiaire (7), les inductances (L) du dispositif d'inductance de stockage (14) et du dispositif d'inductance de stockage supplémentaire (37) sont, en option, égales en amplitude.

14. Onduleur (1) selon la revendication 13 ou selon la revendication 12, tant que le dispositif d'inductance de stockage supplémentaire (37) comprend une autre inductance (51) d'un convertisseur élévateur (34) orienté du circuit intermédiaire de tension (7) vers l'entrée CC (2), **caractérisé en ce qu'**une borne du dispositif d'inductance de stockage supplémentaire (37) peut être raccordée à un pôle (3, 4) de l'entrée CC (2) ou d'une réservoir intermédiaire pour énergie électrique via un élément supplémentaire de commutation.

15. Onduleur (1) selon la revendication 12, **caractérisé en ce que** le convertisseur abaisseur (33) est un convertisseur abaisseur symétrique (52) ayant deux commutateurs (12' et 12") disposés symétriquement par rapport à une ligne centrale (53) et ayant des diodes antiparallèles (55' et 55"), deux inductances (50', 50") disposés symétriquement par rapport à la ligne centrale (53) et deux diodes (45' et 45") disposées symétriquement par rapport à la ligne centrale (53), la ligne centrale (53) raccordant les centres d'un circuit intermédiaire de tension d'entrée (6), les centres entre les diodes (45' et 45") et les centres du circuit intermédiaire de tension (7), et un commutateur (54) étant connecté en parallèle avec les diodes (45' et 45") sans connexion directe avec la ligne centrale (53).

**Fig. 1**

**Fig. 2**

**Fig. 3**

**Fig. 4**

**Fig. 5**

**Fig. 6**

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010035020 A1
- DE 102009029387 A1
- CN 103208935 A
- CH 700030 B1
- WO 2013134904 A1
- WO 2012146414 A2
- JP 2002369388 A
- WO 2011042567 A1
- DE 102006025975 B4